# EUROPEAN PATENT SPECIFICATION

(11) **EP 1 330 109 B1**
(45) Date of publication and mention of the grant of the patent: **29.11.2006**
(21) Application number: 02257266.3
(22) Date of filing: 18.10.2002
(51) Int. Cl.: H04N 1/21

(54) **Index and retrieval system and method for scanned notes from whiteboard**
Index- und Zugriffssystem und Verfahren für von einer weissen Tafel eingelesene Daten
Système et procédé d'indexation et d'accès à des données documentaires balayées sur un tableau blanc

(30) Priority: 21.11.2001 US 990498
(43) Date of publication of application: 23.07.2003
(73) Proprietor: MATSUSHITA ELECTRIC INDUSTRIAL CO., LTD., Kadoma City, Osaka Pref., 571-8501 (JP)
(72) Inventor: Ma, Yue, Princeton Junction, NJ 08550 (US)
(74) Representative: Franks, Robert Benjamin

(56) References cited:
- US-A- 5 539 427
- US-A- 5 572 651
- US-B1- 6 266 054

## Description

### FIELD OF THE INVENTION

The present invention relates generally to index and retrieval systems for use in information processing of user-drawn marks, and more particularly to an index and retrieval system for scanned notes from whiteboard.

### BACKGROUND OF THE INVENTION

Whiteboards are popular collaborative tools widely used in business and technological group endeavors. The ease with which individuals working together on a project can visually communicate ideas to one another using one or more whiteboards has motivated many advances in whiteboard design.

Perhaps foremost among advances in whiteboard design is the ability to save and share whiteboard notes in various ways. For example, some whiteboards with the traditional white panel for use with dry-erase markers employ a scanner for scanning notes into digital form for printing onto hardcopy. Many such whiteboards also have the ability to communicate with a computer for storing notes in memory. Still others use photographic and other techniques, such as radio frequency, to detect user gestures and/or the position of implements (i.e. markers and erasers) for constructing digital information in memory representative of users' markings on the whiteboard. Furthermore, some whiteboards have been developed with active displays in place of the traditional white panel, and users may input markings for display in various ways. One example of such a way involves using the stylus type of marker with a touch sensitive active display to input the markings. Another example of such a way involves implementing position detection technology. In any case, digital information is generally stored in memory and may be shared electronically, printed onto hard copy, and displayed on an active display at a user's option. In addition, where the whiteboard uses an active display with, for example, a stylus for input, rather than a traditional whiteboard panel with dry erase markers, the notes may be redisplayed so as to allow a discussion to continue where it left off. Retrieving the desired whiteboard note from memory, however remains problematic.

Some solutions to the problem of retrieving desired whiteboard notes stored in memory have been attempted. When digitized whiteboard notes are in computer memory and a user interface is provided supporting keyboard entry, for example, users have the option of taking the time and making the effort required to descriptively label files containing whiteboard notes in a manner facilitating future retrieval. This first solution, however, is not always available and also requires that users surrender the facility of whiteboard communication while indexing notes. As a second solution, it is also practicable to display plural whiteboard notes in their entirety as a thumbnail on an active display for users to browse, but the information in the notes is difficult to perceive in such a solution.

US 5,539,427 discloses a pen based method for selecting, indexing and retrieving data, comprising a re-useable panel for use with temporary marker pens dispensing erasable ink and configured to temporarily display user drawn marks, and a digitizer for generating digital information corresponding to the user drawn marks and an indexer. US 5,539,427 operates by capturing stroke data from a hand writing instrument and is not particularly suited for use with a conventional whiteboard application.

Therefore, providing an ease of use system and method to index whiteboard notes and retrieve them once they are stored in a system remains the task of the present invention.

### Summary of the Invention

In a first aspect, there is provided an index and retrieval system for user-drawn marks on a white board (10) comprising:
a re-useable panel for use with temporary markers dispensing erasable ink and configured to temporarily display user-drawn marks;
a scanner for scanning whiteboard notes from the whiteboard panel and for generating digital information corresponding to the user-drawn marks; and
an indexer,
characterized in that:
said indexer is operable for associating selected portions of the user-drawn marks selected by the user with a header, wherein the indexer is operable for:
   extracting (30) a circled region from the digital information corresponding to the user-drawn marks using circled region extraction;
   removing (34) a circle which demarcates the circled region from the digital information associated with the circled region;
   constructing a header based at least in part on the digital information encapsulated within the circled region; and
   associating (40) the digital information as data with the header as meta data; and
   a plotter (86) providing said re-useable panel with re-display capability, wherein the associated digital information is displayed on the re-useable panel via the re-display capability of said plotter as machine-drawn marks at an option of the user, and wherein the plotter drawn marks reproduce the user-drawn marks from which the associated digital information was generated.
   The digital information is generated at least in part from the user-drawn marks.

Further areas of applicability of the present invention will become apparent from the detailed description provided hereinafter. It should be understood that the detailed description and specific examples, while indicating the preferred embodiment of the invention, are intended for purposes of illustration only and we are not intended to limit the scope of the invention.

### BRIEF DESCRIPTION OF THE DRAWINGS

The present invention will become more fully understood from the detailed description and the accompanying drawings, wherein:

Figure 1a is a perspective view of a first whiteboard apparatus according to the previous technology featuring a scrolling panel and a fixed scanner.

Figure 1b is a perspective view of a second whiteboard apparatus according to the previous technology featuring a fixed panel and a mobile scanner.

Figure 2 is a perspective view of a whiteboard apparatus in communication with a personal computer, wherein flow of digitized information corresponding to whiteboard notes having a circled region is depicted, and wherein circled region extraction, circle removal, and handwriting recognition are supported.

Figure 3 is a flowchart depicting a method for indexing notes scanned from whiteboard in accordance with the present invention.

Figure 4 is a representative view of a scan line for use with mark-up removal shown in the process of detecting non-background pixels that correspond to portions of a user-drawn circle.

Figure 5a is a representative browser screen depicting whiteboard notes indexed by headers corresponding to extracted circled regions of the notes with circles removed.

Figure 5b is a representative browser screen depicting whiteboard notes indexed by headers corresponding to recognized text from within a circled region of the associated notes.

Figure 6 is a perspective view of a whiteboard apparatus with a plotter and touch screen display in accordance with the present invention.

Figure 7 is a flowchart depicting circle extraction according to the system and method of the present invention.

### DETAILED DESCRIPTION OF THE PREFERRED EMBODIMENTS

The following description of the preferred embodiment(s) is merely exemplary in nature and is in no way intended to limit the invention, its application, or uses.

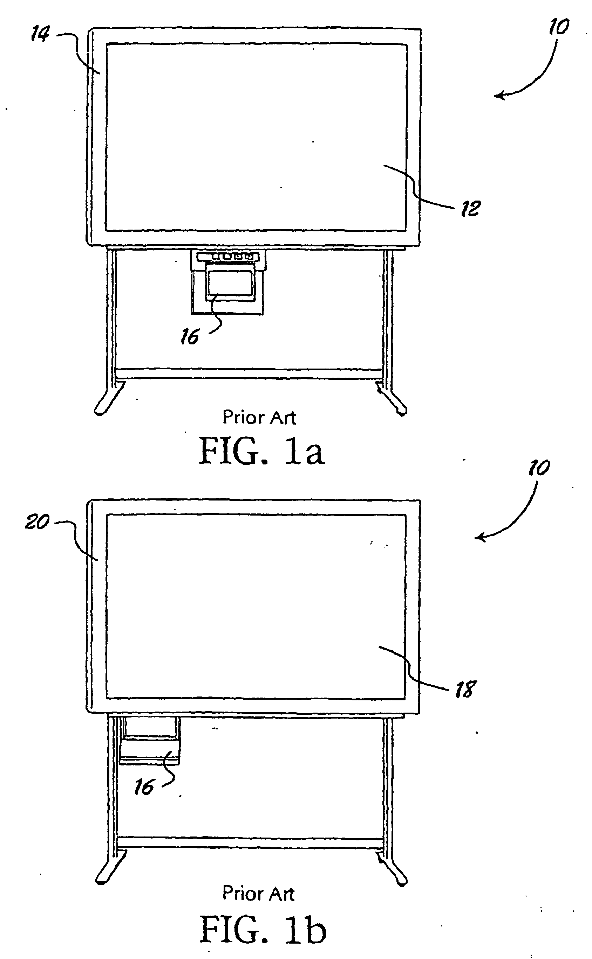

Referring to figure 1a, a whiteboard apparatus 10 according to the previous technology is shown that features a scrolling panel 12 and a fixed scanner (not shown) hidden in the frame 14. The scrolling panel 12 may feature two or four writing surfaces each accessible in turn by scrolling the panel in a horizontal direction. The whiteboard apparatus also features a printer 16 for printing scanned notes onto hardcopy. Users may mark on the scrolling panel 12 with standard dry erase markers and erase with an eraser, tissue, fingertips, or other means as needed. Users may then print the finished whiteboard notes by activating a scanning mode wherein the scrolling panel 12 scrolls in a horizontal direction and the fixed scanner (not shown) hidden in the frame 14 generates digital information corresponding to the whiteboard notes that is simultaneously printed on hardcopy via the printer 16. Several copies may be printed at the users' option, but following printing the digital information is lost unless communicated to a computer memory (not shown) via a communications link (not shown). Many state of the art whiteboards of the type shown in figure 1 feature a communications link (not shown) for this purpose.

The whiteboard apparatus 10 of figure 1 is displayed here for reference because the following exemplary embodiments will primarily be discussed with regard to utilization, incorporation, adaptation, and combinations thereof the whiteboard apparatus 10 of figure 1. The whiteboard apparatus of figure 1, while lacking some of the advantages associated with implementing a large active display and/or simultaneous generation of digital information, does not incorporate the expense associated with a large active display and features the greatest ease of use by avoiding the need for special implements, which may be lost, and/or requirements for users to change illustration modes (i.e. color and/or write mode vs. erase mode) and possibly lose information due to delay or mismatch between activated mode and actual marks on the screen. One skilled in the art, however, will recognize that the system and method of the present invention will find application with other implementations of the whiteboard apparatus 10, as well as with personal digital assistants, laptops with touchscreens, cell phones, and other illustrative demonstration tools useful for collaboration through various means, including but not limited to digital data link.

Referring to figure 1b, a whiteboard apparatus 10 is shown that features a static panel 18 and a mobile scanner 20. The static panel 18 is static in the sense that it does not move during scanning, but remains in place while the mobile scanner 20 moves horizontally across the static panel 18. The static panel 18, however, may flip over to reveal a second writing surface. The whiteboard apparatus 10 also features a printer 16 and is in other respects similar to the whiteboard apparatus of figure 1a. The whiteboard apparatus of figure 1b is displayed for reference to demonstrate that various means exist for scanning or otherwise acquiring notes from whiteboard that are known in the art and that adaptation of the present invention to accommodate these various means will be obvious to those skilled in the art.

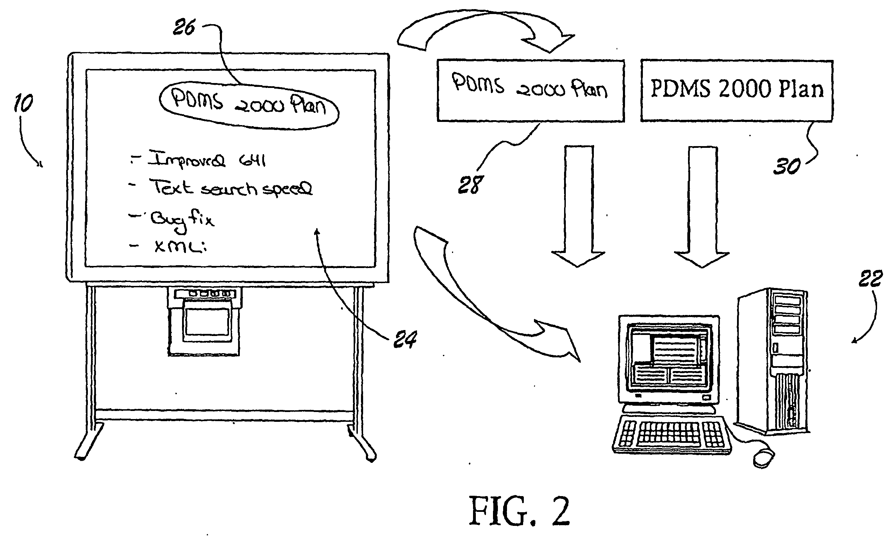

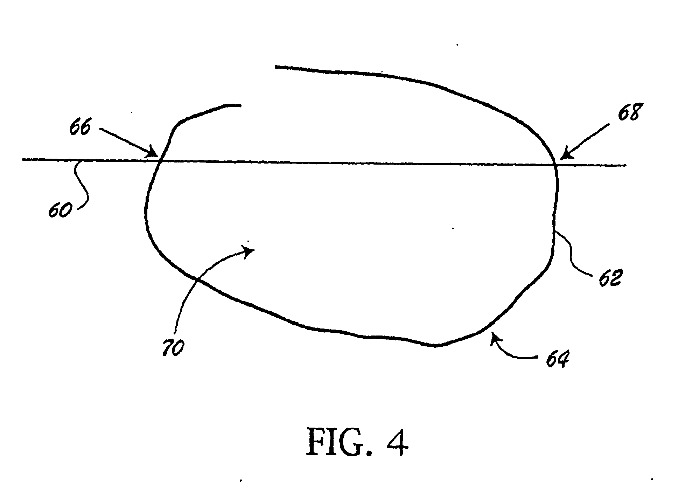

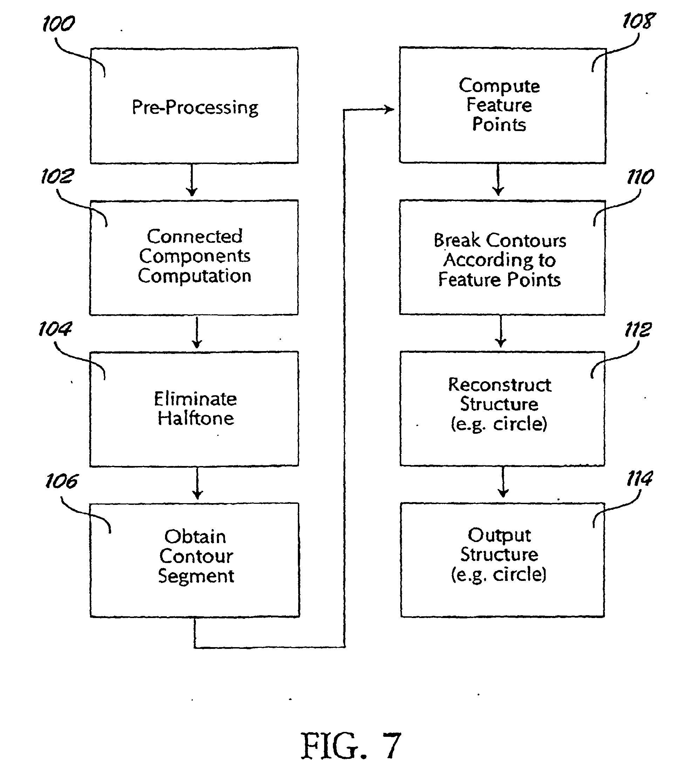

Referring to figure 2, a whiteboard apparatus 10 is shown in communication with a personal computer 22. Additionally, the whiteboard apparatus 10 is depicted as displaying user-drawn marks on the scrolling panel corresponding to whiteboard notes 24 having a marked-up region corresponding to a circled region 26 that is a key region of the whiteboard notes 24. As according to the present invention, the circled region 26 is extracted from the digital information generated by the scanner (not shown) via circled region extraction technology. As will be appreciated by those skilled in the art, circled region extraction technology may be applied to digital information corresponding to scanned notes from whiteboard; circled region extraction technology is explained below with reference to figure 7. As further according to the present invention, optional mark-up removal corresponding to circle removal is applied to the extracted digital information to generate an extracted circled region 28. Circle removal is more fully detailed below with reference to figure 4.

Still further in accordance with the present invention, optional handwriting recognition technology is applied to the extracted circled region 28 to generated recognized text 30 corresponding to handwritten text within the circled region 26. As will be obvious to those skilled in the art, each step in the system and method of the present invention disclosed thus far involving circled region extraction, circle removal, and handwriting recognition may be accomplished at any time or location subsequent to and/or simultaneous with generation, communication, and/or receipt of digital information corresponding to the whiteboard notes 24. For example, if the whiteboard apparatus 10 has the necessary computing capability, any of the three steps may be accomplished "on-board" the whiteboard apparatus 10. Additionally, any of the three steps may be accomplished on the personal computer 22 after and/or simultaneous with receipt of the information or en route at any of a plurality of optional intervening computing modules (not shown). One skilled in the art will recognize that further possibilities exist regarding the order, location, combinations, and/or manner in which the steps take place.

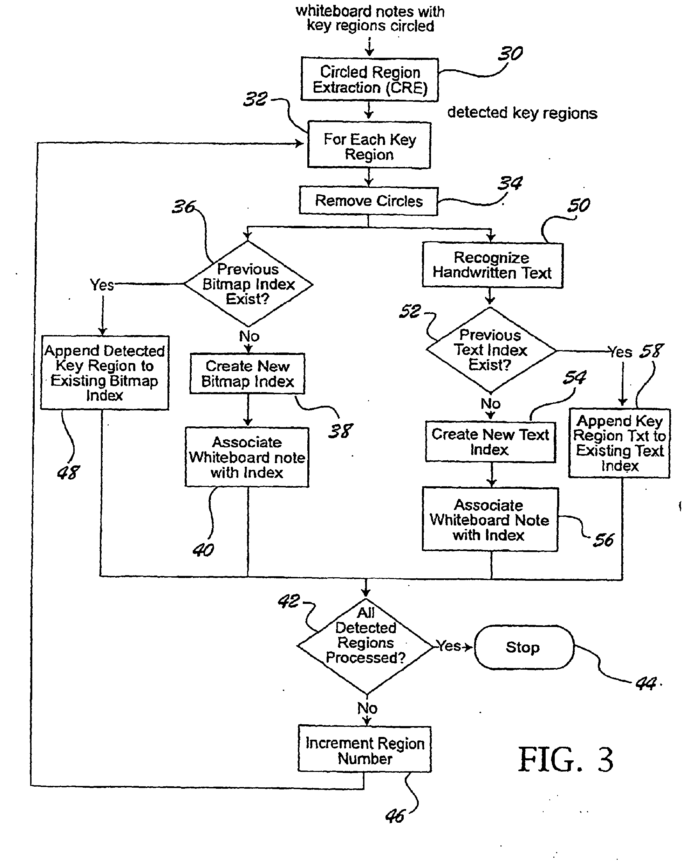

Referring to figure 3, an indexing method according to the present invention is shown. The method supports optional circle removal and handwriting recognition for purposes of illustration. As according to figure 3, circled region extraction is performed on digital information corresponding to whiteboard notes with key regions circled at step 30. As a result of processing at step 30, digital information corresponding to a plurality of detected key regions is produced such that every circled region is extracted from the whiteboard notes. Processing of each key region begins at step 32, and optional circle removal is performed on each key region.

Circle removal assists the system and method of the present invention in two ways. First, in the event that index images corresponding to thumbnails of an extracted circled region are presented for user selection, circle removal assists in users' viewing of the index images. Second, in the event that index images corresponding to recognized text from within extracted circled regions are presented for user selection, circle removal assists in handwriting recognition of text within the extracted circled region. An exemplary method for circle removal will be more fully detailed below.

Subsequent to optional circle removal at step 34, either or both of two courses may be taken. These two courses are further detailed below.

In the first course, a determination is made whether a previous bitmap index exists for the whiteboard notes as at 36. In the event that no previous bitmap index exists for the whiteboard notes (i.e. this key region is the first key region processed for these whiteboard notes) a new bitmap index is created at step 38 and the whiteboard notes are associated as data with the bitmap index as metadata at step 40.

Following association of the data with the metadata, a determination is made regarding whether all detected key regions have been processed as at 42, and processing stops as at 44 if all detected key regions have been processed. If all detected key regions have not been processed, a region number is incremented at step 46 and processing continues at step 32. Circle removal is optionally performed on the next key region at step 34, and when the determination is made as at 36 regarding whether a previous bitmap index exists for these whiteboard notes, the determination will be in the affirmative since the bitmap index was created previously as noted above. Thus, the detected key region is appended to the existing bitmap index at step 48. In other words, a second header is constructed for the second key region and the whiteboard notes are associated with the second header.

Following appending of the detected key region to the existing bitmap index, processing continues with a determination being made whether all detected key regions have been processed and, if so, processing stops as at 44. If there exist additional detected key regions that have not been processed, processing continues with each key region being appended to the existing bitmap index as at step 48. The result of this processing is indexing of data with metadata, wherein the data is digital information corresponding to whiteboard notes having circled key regions, and wherein the metadata is a bitmap index corresponding to the plurality of detected key regions with each detected key region processed after the first detected key region being appended to the preceding key region. In other words, headers are constructed for the each key region and the whiteboard notes are associated with each header.

In the second course, handwriting recognition is performed on a detected key region at step 50, and recognized text is generated corresponding to the user-drawn text within the detected key region. A determination is made whether a previous text index exists for the whiteboard notes as at 52. In the event that no previous text index exists for the whiteboard notes (i.e. this key region is the first key region processed for these whiteboard notes) a new text index is created at step 54 that corresponds to the recognized text and the whiteboard notes are associated as data with the text index as metadata at step 56.

Following association of the data with the metadata, a determination is made regarding whether all detected key regions have been processed as at 42, and processing stops as at 44 if all detected key regions have been processed. If all detected key regions have not been processed, a region number is incremented at step 46 and processing continues at step 32. Circle removal is optionally performed on the next key region at step 34, and handwriting recognition is performed on the detected key region at step 50 to generate recognized text corresponding to the user-drawn text within the detected key region. When the determination is made as at 52 regarding whether a previous text index exists for these whiteboard notes, the determination will be in the affirmative since the text index was created previously as noted above. Thus, the recognized text is appended to the existing text index at step 58. In other words, a second header is constructed for the second key region and the whiteboard notes are associated with the second header.

Following appending of the recognized text to the existing text index, processing continues with a determination being made whether all detected key regions have been processed and, if so, processing stops as at 44. If there exist additional detected key regions that have not been processed, processing continues with each recognized text from each key region being appended to the existing text index as at step 58. The result of this processing is indexing of data with metadata, wherein the data is digital information corresponding to whiteboard notes having circled key regions, and wherein the metadata is a text index with appended text. The text index corresponds to the recognized text from within the detected key region that is first processed, and the appended text corresponds to recognized text from within each detected key region processed subsequent to the detected key region that is first processed, wherein the recognized text from within each detected key region that is not the first processed is appended to the recognized text from within the preceding detected key region, In other words, headers are constructed for the each key region and the whiteboard notes are associated with each header.

As will be readily understood by one skilled in the art, processing consistent with the indexing method according to the present invention may take many forms. For example, circle removal may or may not be implemented, processing may not include all detected key regions, either or both types of indexed data may be generated either simultaneously or in any order, and more or less steps may be implemented in various orders and/or combinations. Additionally, more details regarding an exemplary mark-up removal method according to the present invention are set forth below.

Referring to figure 4, a scan line 60 for use with mark-up removal is shown in the process of detecting non-background pixels 62 that correspond to portions of a user-drawn circle 64. In an exemplary mark-up removal method, the scan line 60 moves from the top of the circled region to the bottom of the circled region at a step of one pixel. For each scan, the non-background pixel 62 that is on the far left is marked with "xmin" as shown at 66. Similarly, the non-background pixel 62 that is on the far right is marked with "xmax" as shown at 68. At the same scan line 60, movement is made from "xmin" to the right until a first background pixel 70 is detected, and all non-background pixels 62 are erased in movement to the left from the current position to and including "xmin." Similarly, at the same scan line 60 movement is made from "xmax" to the left until a first background pixel 70 is detected, and all non-background pixels 62 are erased in movement to the right from the current position to and including "xmax." Those skilled in the art will readily appreciate that, though designed to be simple, the exemplary mark-up removal method may be altered in several ways in accord with the present invention.

As a result of tailoring to perform circle removal on circled regions extracted from scanned notes from whiteboard, the exemplary mark-up removal method makes certain assumptions. For example, it assumes that there is only one user-drawn circle 64 in each detected key region. It also assumes that the user-drawn circle 64 is roughly a concave curve. It further assumes that the image area of the circled region is clean after pre-processing. It still further assumes that the user-drawn circle 64 can be closed or near closed. One skilled in the art will readily understand that various alterations in the method disclosed above can be made that are consistent with the present invention. For example, scanning may occur from bottom to top, side to side, radially, in one or multiple portions of a marked-up area, or in other ways appropriate to and facilitated by the type of mark-up and digital image processing employed. Similarly, marking of background pixels 70 may occur rather than marking of non-background pixels 62, with erasure of background pixels 62 proceeding in various directions to and from various points. Further, different types of mark-up, including user-drawn lines and/or curves comprising brackets, parentheses, boxes, underlines, etc., may be removed using the mark-up removal method of the present invention if different and/or additional assumptions are accommodated as will be readily understood by one skilled in the art. Additionally, an exemplary implementation of a retrieval system and method utilizing the indexed data resulting from the previously disclosed system and methods is disclosed below.

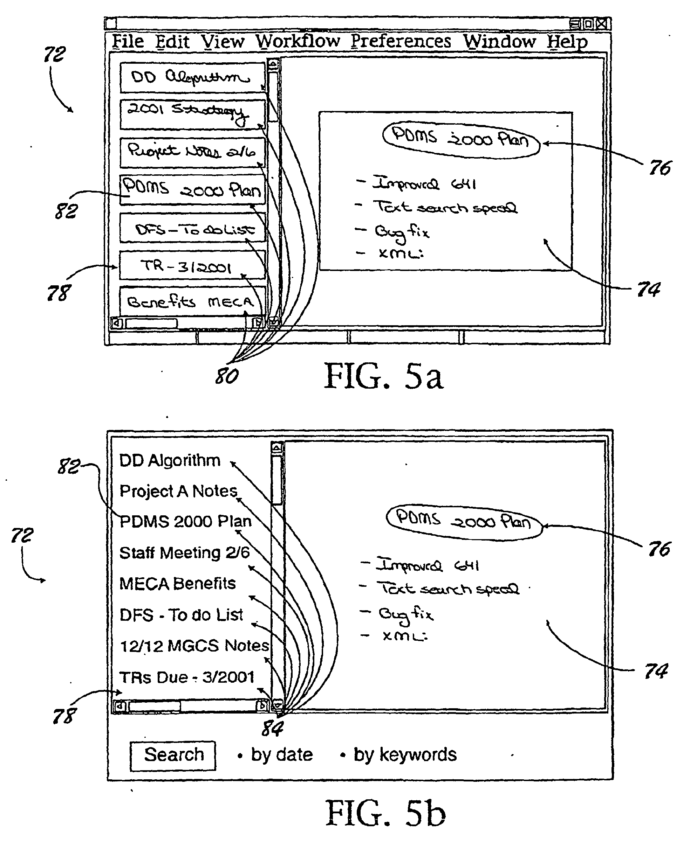

Referring to figure 5a, a browser screen 72 is shown depicting whiteboard notes 74 having circled regions 76 indexed by index information 78 corresponding to user-drawn marks from extracted circled regions 80 of the associated whiteboard notes 74 with circles removed. A user may, thus, browse thumbnail headers of stored whiteboard notes 74 and, upon user selection of a particular header, the whiteboard notes associated with the selected header 82 may be concurrently displayed. The user may then choose to take additional action concerning the whiteboard notes 74, such as printing, faxing, emailing, editing, and/or redisplaying the notes on the whiteboard apparatus when such additional actions are supported in conjunction with the apparatus displaying the browser screen 72.

Referring to figure 5b, a browser screen 72 is shown depicting whiteboard notes 74 having circled regions 76 that are indexed by index information 78 corresponding to recognized text 84 from within the extracted circled regions (not shown) of the associated whiteboard notes 74. Similarly to the method and system of retrieval disclosed above with respect to figure 5a, a user may browse text headers of stored whiteboard notes 74 and, upon user selection of a particular header, the whiteboard notes associated with the selected header 82 may be concurrently displayed and further action optionally taken as supported.

One skilled in the art will readily understand that it may be desirable to implement circle removal, text recognition, and generation of both bitmap and text index metadata types to facilitate ease of use. Users may benefit from the ability to switch back and forth between index images corresponding to extracted circled regions and recognized text to facilitate browsing. For example, the bitmap-based header may prove superior where a particular user's ability to interpret the user-drawn marks of a particular set of whiteboard notes exceeds that of the handwriting recognition technology employed. Similarly, the text-based header may prove superior where the ability of the handwriting recognition technology to interpret the user-drawn marks of a particular set of whiteboard notes 74 exceeds that of a particular user. Additionally, an exemplary apparatus for implementation of the system and method of the present invention is more detailed below.

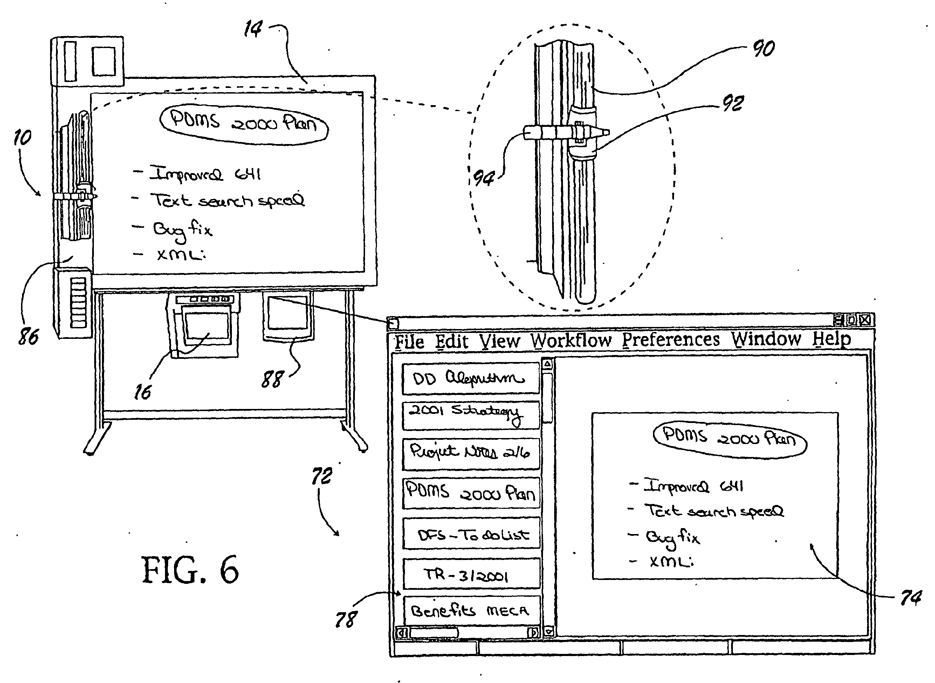

Referring to figure 6, a whiteboard apparatus 10 with a plotter 86 and touchscreen display 88 for use with the system and method of the present invention is shown. The whiteboard apparatus 10 of figure 6 is similar to the whiteboard apparatus 10 of figure 1a, but has been adapted for use with the present invention. The touchscreen display 88 is shown as mounted at the bottom of the frame 14 of the whiteboard apparatus 10 adjacent to the printer 16 and tilted upward so as to be viewable to and operable by a user standing before the whiteboard apparatus 10. It may be desirable to hinge the touchscreen display 88 so as to permit user manipulation, to place the touchscreen display 88 in another location, and/or to make the touchscreen display 88 detachable so as to facilitate remote control of the whiteboard apparatus 10. An exemplary browser screen 72 is shown displayed on the touchscreen display 88 enabling user selection of headers 78 by touch operation of the touchscreen display 88.

Once a user has selected a particular set of whiteboard notes 74, the user may print the notes to hardcopy via the printer 16, and/or redisplay the notes via the plotter 86, shown vertically mounted on and/or incorporated into the frame 14. It is also foreseeable that users may email, fax, edit, or otherwise take further action regarding the whiteboard notes 74 as supported by the whiteboard apparatus or a second device (not shown) in communication with the whiteboard apparatus via a communications link (not shown).

The exemplary plotter 86, features a fixed arm 90 with a vertically mobile sleeve 92 for manipulating a plotter pen, such as a dry-erase marker 94. The exemplary plotter 86, operates by moving the dry erase marker 94 vertically in relation to the horizontally scrolling panel 12 while intermittently bringing the writing tip of the dry erase marker 94 into contact with the scrolling panel 12 to reproduce the selected whiteboard notes 74 from memory.

As will readily be understood by one skilled in the art, various types of plotters 86 and plotter mounting schemes may be implemented to accomplish the present invention. For example, the whiteboard apparatus 10 of figure 1b may have a horizontally mobile arm with a vertically mobile sleeve, while both examples of the whiteboard apparatus 10 may implement one or more arms mobile in multiple linear and/or radial directions. Additionally, plotters may have multiple markers, markers capable of switching color, and/or the ability to change markers during use. Additional implementations will be readily understood by one skilled in the art. Finally, it will be readily apparent to one skilled in the art that whiteboards, laptops, personal computers, personal digital assistants, cell phones, and similar communication tools having active displays for the main display with touchscreen and/or similar input means for accepting user-drawn marks have inherent redisplay capability and thus may reproduce user-drawn marks without the need for a plotter. Application of the system and method of the present invention to the aforementioned technologies will be readily appreciated by those skilled in the art, as will advantages associated with such application.

Referring to figure 7, a flowchart depicting a procedure identifying a user-drawn circle in a scanned image for use with the present invention is shown. Beginning at step 100, the procedure first pre-processes the image to convert the image data into suitable resolution and bit depth for connected component analysis. This preprocessing is an optional step that can be performed, for example, to convert color image data into black-and-white data or to convert gray scale data into black and white data.

The procedure next proceeds to step 102 where connected component analysis is performed. A first embodiment uses pixel labeling with bounding box computation techniques to extract candidate objects for performing connected component analysis, whereas a second embodiment uses run-length analysis techniques. According to the first embodiment, the image is scanned line-by line and each pixel is labeled if it is connected with its neighboring pixels. After labeling the pixels for connectivity, a bounding box is calculated for each connected component. These bounding boxes are used to extract the candidate area in the image. According to the second embodiment, the image data is expressed as a grid of columns and rows and a scan order is established over the grid to define parent, child, and sibling relationships among run lengths of contiguous or nearly contiguous black pixels according to mutual proximity and position within the grid. These relationships, along with starting and ending column and row positions for a run, are populated into one or more run data structures which may be traversed to identify contours within a region.

If desired, at step 104, half-tone data may be eliminated and small gaps in pixel data (attributable to noise) may be eliminated. Individual white pixels in an otherwise black pixel domain may be converted to black pixels to "fill in" or de-speckle the image data. Also, contours unlikely to represent a user-drawn circle may be eliminated based on predetermined criteria, such as in the case where a bounding box of the first embodiment is too small.

After the connected components have been identified, the process advances to step 106, where contour segment information is extracted from the data. The contour segment extraction process is performed according to the first embodiment by tracing the inside and outside perimeters of the lines that define the candidate objects. According to the second embodiment, the contour segment extraction process is performed using the populated data structures formed during run length analysis as disclosed above. More specifically, traversal of the populated data structure among midpoints of run lengths from parent to child, then sibling to sibling, then child to parent, for example, in a recursive manner permits recognition of connected contours readily corresponding to vector graphics, for example. In the case of either the first or second embodiment, the contour segment extraction process results in one or more connected contours, where a connected contour serves as a "replacement" for the originally drawn circle.

Following extraction of contour segments, the procedure continues by computing feature points in a connected contour at step 108. In one embodiment, maximum and/or minimum x and y values of a connected contour serve as feature points, as do any endpoints of the connected contour and/or junctions of circles with other objects. These feature points are used to break the connected contour into contour segments at step 110. Breaking the connected contour according to its feature points is useful in situations where user-drawn circles may contact or overlap other contour structures.

Following breaking of connected contours according to feature points, the feature points are then used at step 112 to reconstruct circles. In essence, segments are examined and reconnected such that segments belonging to different objects are separated and those belonging to the same object are connected. The main criterion for reconnecting the contour segments is to check the smoothness when making the transition between neighboring segments. A predetermined threshold regarding comparative slope of a constructed line between proximate endpoints of two segments, for example, may be used to determine whether two line segments are approaching one another in such a way as to be connected. Other approaches for analyzing the angle between proximate segments will also be obvious to those skilled in the art.

Following reconnection of segment endpoints, reconstructed circles are then output at step 114. The reconstructed circles are generated without gaps or ambiguity regarding closure, thus the subsequent image processing can be performed more efficiently.

As will be readily appreciated by one skilled in the art, it may be additionally desirable to analyze any open loops to ensure that endpoints of a contour are constrained within a predetermined distance of one another and/or another enclosing portion of the circle as part of or in addition to the steps detailed above. As a result of the generation of unambiguous, reconstructed circles as detailed above, a bounding box around the contour of the generated circle may be used to delimit the area for extraction. Similarly, one may choose a bounding oval, etc.

## Claims

1. An index and retrieval system for user-drawn marks on a white board (10) comprising:
a re-useable panel for use with temporary markers dispensing erasable ink and configured to temporarily display user-drawn marks;
a scanner for scanning whiteboard notes from the whiteboard panel and for generating digital information corresponding to the user-drawn marks; and
an indexer,
**characterized in that**:
said indexer is operable for associating selected portions of the user-drawn marks selected by the user with a header, wherein the indexer is operable for:
extracting (30) a circled region from the digital information corresponding to the user-drawn marks using circled region extraction;
removing (34) a circle which demarcates the circled region from the digital information associated with the circled region;
constructing a header based at least in part on the digital information encapsulated within the circled region; and
associating (40) the digital information as data with the header as meta data; and
a plotter (86) providing said re-useable panel with re-display capability, wherein the associated digital information is displayed on the re-useable panel via the re-display capability of said plotter as machine-drawn marks at an option of the user, and wherein the plotter drawn marks reproduce the user-drawn marks from which the associated digital information was generated.

2. The apparatus as claimed in claim 1 wherein the user-drawn marks contain plural circled regions, wherein every circled region is extracted, wherein headers are constructed for each circled region, and wherein the digital information is associated as data with each header as metadata.

3. The apparatus of claim 1, wherein the indexing method further comprises the step of constructing recognized text using handwriting recognition on the circled region from which a circle has been removed, and wherein the header is based at least in part on the recognized text.

4. The apparatus of claim 1, further comprising an active display for display of a plurality of headers, wherein associated digital information that is digital information associated with a header is concurrently displayed on said active display with the header upon selection of the header by a user.

5. The apparatus of claim 1, wherein said indexer is operable for removing said circle by:
moving a scan line in a plane of the circle region in a first direction;
scanning the circled region in a second direction, wherein the second direction lies in a complementary fashion to the first direction in the plane of the circled region;
detecting non-background pixels within the scan line corresponding to the circle; and
erasing the non-background pixels.

6. The apparatus of claim 4, wherein said indexer is operable for removing said circle by:
detecting a first non background pixel within the scan line, wherein the first non-background pixel corresponds to the non-background pixel first detected in a first linear scan of all pixels in the scan line;
detecting a first background pixel within the scan line, wherein the first background pixel corresponds to the background pixel first detected after detection of the first non-background pixel in the first linear scan of all pixels in the scan line;
detecting a second non-background pixel within the scan line, wherein the second non-background pixel corresponds to the non-background pixel last detected in the first linear scan of all pixels in the scan line;
detecting a second background pixel within the scan line, wherein the second background pixel corresponds to the background pixel first detected in a second linear scan of pixels in the scan line, wherein the second linear scan starts at the second non-background pixel and proceeds in a direction opposite to the first linear scan;
removing the first non-background pixel;
removing all non-background pixels between the first non-background pixel and the first background pixel;
removing the second non-background pixel; and
removing all non-background pixels between the second non-background pixel and the second background pixel.

7. The apparatus of claim 6, wherein there exists only one circle in each circled region, wherein the circle is a concave curve that is at least one of closed and near closed, and wherein speckle noise has been removed from the circled region via pre-processing.

## Patentansprüche

1. Index- und Zugriffssystem für vom Benutzer auf eine Weißwandtafel (10) gezeichnete Zeichen, das aus Folgendem besteht:
einem wiederverwendbaren Panel zum Gebrauch mit nichtpermanenten Markern, die abwischbare Tinte abgeben, und dazu angepasst, vom Benutzer gezeichnete Zeichen vorübergehend anzuzeigen;
einem Scanner zum Scannen der Weißwandtafel-Notizen aus dem Panel und zum Erzeugen von Digitalinformation, die den vom Benutzer gezeichneten Zeichen entspricht; und
einem Indexer,
der **dadurch gekennzeichnet ist, dass**:
der Indexer betriebsfähig ist, ausgewählte Teile der vom Bediener gezeichneten und vom Bediener ausgewählten Zeichen mit einem Header zu assoziieren, worin der Indexer für Folgendes betriebsfähig ist:
Extrahieren (30) eines eingekreisten Bereichs aus der Digitalinformation, die den vom Benutzer gezeichneten Zeichen entspricht, durch Extraktion des eingekreisten Bereichs;
Entfernen (34) eines Kreises, der den eingekreisten Bereich von der Digitalinformation abgrenzt, die mit dem eingekreisten Bereich assoziiert ist;
Konstruktion eines Headers, mindestens teilweise auf der Digitalinformation basierend, die im eingekreisten Bereich umgrenzt ist; und
Assoziation (40) der Digitalinformation als Daten mit dem Header als Metadaten; und
einen Plotter (86), der das wiederverwendbare Panel mit Display-Erneuerungsfähigkeit versieht, worin, einer Benutzeroption folgend, die assoziierte Digitalinformation durch die Display-Erneuerungsfähigkeit des Plotters auf dem wiederverwendbaren Panel als maschinell gezeichnete Zeichen aufgezeigt wird, und worin die vom Plotter gezeichneten Zeichen die vom Benutzer gezeichneten Zeichen wiedergeben, von denen die assoziierte Digitalinformation erzeugt wurde.

2. Gerät nach Anspruch 1, worin die vom Benutzer gezeichneten Zeichen eine Vielzahl von eingekreisten Bereichen enthalten, worin jeder eingekreiste Bereich extrahiert wird, worin für jeden eingekreisten Bereich Headers konstruiert werden und worin die Digitalinformation als Daten mit jedem Header als Metadaten assoziiert ist.

3. Gerät nach Anspruch 1, worin das Indexierverfahren außerdem den Schritt umfasst, durch Anwendung der Handschrifterkennung auf den eingekreisten Bereich, von dem ein Kreis entfernt wurde, erkannten Text zu konstruieren, und worin der Header mindestens zum Teil auf dem erkannten Text basiert.

4. Gerät nach Anspruch 1, das außerdem ein aktives Display zum Anzeigen einer Vielzahl von Headern umfasst, worin assoziierte Digitalinformation, die mit einem Header assoziierte Digitalinformation ist, gleichzeitig mit dem Header auf dem aktiven Display angezeigt wird, wenn der Benutzer den Header auswählt.

5. Gerät nach Anspruch 1, worin der Indexer durch Folgendes zum Entfernen des Kreises betriebsfähig ist:
Bewegung einer Scanzeile in einer Ebene des eingekreisten Bereichs in einer ersten Richtung;
Scannen des eingekreisten Bereichs in einer zweiten Richtung, worin die zweite Richtung in der Ebene des eingekreisten Bereichs auf komplementäre Weise zur ersten Richtung verläuft;
Erkennung von Nicht-Hintergrundpixeln innerhalb der Scanzeile, die dem Kreis entsprechen; und
Löschen der Nicht-Hintergrundpixel.

6. Gerät nach Anspruch 4, worin der Indexer durch Folgendes zum Entfernen des Kreises betriebsfähig ist:
Erkennen eines ersten Nicht-Hintergrundpixels innerhalb der Scanzeile, worin das erste Nicht-Hintergrundpixel dem Nicht-Hintergrundpixel entspricht, das zuerst bei einem ersten linearen Scan aller Pixel in der Scanzeile erkannt wurde;
Erkennen eines ersten Hintergrundpixels innerhalb der Scanzeile, worin das erste Hintergrundpixel dem Hintergrundpixel entspricht, das nach Erkennung des ersten Nicht-Hintergrundpixels im ersten linearen Scan aller Pixel in der Scanzeile zuerst erkannt wurde;
Erkennen eines zweiten Nicht-Hintergrundpixels innerhalb der Scanzeile, worin das zweite Nicht-Hintergrundpixel dem Nicht-Hintergrundpixel entspricht, das im ersten linearen Scan aller Pixel in der Scanzeile zuletzt erkannt wurde;
Erkennen eines zweiten Hintergrundpixels innerhalb der Scanzeile, worin das zweite Hintergrundpixel dem Hintergrundpixel entspricht, das in einem zweiten linearen Scan von Pixeln in der Scanzeile zuerst entdeckt wurde, worin der zweite lineare Scan am zweiten Nicht-Hintergrundpixel beginnt und in einer dem ersten linearen Scan entgegengesetzten Richtung fortfährt;
Entfernen des ersten Nicht-Hintergrundpixels;
Entfernen aller Nicht-Hintergrundpixel zwischen dem ersten Nicht-Hintergrundpixel und dem ersten Hintergrundpixel;
Entfernen des zweiten Nicht-Hintergrundpixels; und
Entfernen aller Nicht-Hintergrundpixel zwischen dem zweiten Nicht-Hintergrundpixel und dem zweiten Hintergrundpixel.

7. Gerät nach Anspruch 6, worin es in jedem eingekreisten Bereich nur einen Kreis gibt, worin der Kreis eine konkave Kurve ist, die eine geschlossene oder fast geschlossene Kurve ist und worin das Fleckenrauschen durch Vorverarbeitung aus dem eingekreisten Bereich entfernt wurde.

## Revendications

1. Système d'indexation et d'accès à des marques tracées par l'utilisateur sur un tableau blanc (10) comportant :
un tableau réutilisable avec des marqueurs non indélébiles à encre effaçable, et configuré pour présenter temporairement des marques tracées par l'utilisateur;
un scanneur servant à balayer les données documentaires sur le tableau blanc, et à produire des données numériques correspondant aux marques tracées par l'utilisateur; et
un indexeur,
**caractérisé en ce que**:
l'indexeur est utilisé pour associer certaines parties des marques tracées par l'utilisateur, et qui auront été sélectionnées par celui-ci, avec un en-tête, **caractérisé en ce que** l'indexeur est utilisé pour :
extraire (30) une zone cerclée de l'information numérique correspondant aux marques tracées par l'utilisateur en faisant appel à une technologie d'extraction de zones cerclées;
supprimer (34) un cercle qui délimite la zone cerclée de l'information numérique associée à la zone cerclée;
créer un en-tête qui se base au moins en partie sur l'information numérique qui est intégrée dans la zone cerclée; et
associer (40) l'information numérique qui constitue les données avec l'en-tête qui constitue la métadonnée; et
un traceur (86) permettant au tableau réutilisable de réafficher les données, **caractérisé en ce que** l'information numérique correspondante est présentée sur le tableau réutilisable, grâce à la capacité de réaffichage du traceur, sous forme de marques tracées par la machine en tant qu'option pour l'utilisateur, et **caractérisé en ce que** les marques tracées par le traceur reproduisent les marques tracées par l'utilisateur à partir desquelles l'information numérique correspondante a été produite.

2. Système selon la revendication 1, **caractérisé en ce que** les marques tracées par l'utilisateur contiennent plusieurs zones cerclées, **caractérisé en ce que** chaque zone cerclée est extraite, **caractérisé en ce que** des en-têtes sont créés pour chacune des zones cerclées, et **caractérisé en ce que** l'information numérique qui constitue les données est associée avec chaque en-tête qui constitue la métadonnée.

3. Système selon la revendication 1, **caractérisé en ce que** le procédé d'indexation comporte par ailleurs l'étape qui consiste à créer un texte reconnu en utilisant la reconnaissance de caractères manuscrits dans la zone cerclée dont on a supprimé le cercle, et **caractérisé en ce que** l'en-tête se base au moins en partie sur le texte reconnu.

4. Système selon la revendication 1, comportant par ailleurs un écran actif servant à afficher une pluralité d'en-têtes, **caractérisé en ce que** l'information numérique correspondante, c'est-à-dire l'information numérique associée à un en-tête, est affichée sur l'écran actif en même temps que l'en-tête, dès que l'en-tête est sélectionné par un utilisateur.

5. Système selon la revendication 1, **caractérisé en ce que** l'indexeur est utilisé pour supprimer le cercle :
en déplaçant une ligne de balayage dans un plan de la zone cerclée dans une première direction;
en balayant la zone cerclée dans une deuxième direction, cette deuxième direction étant complémentaire à la première direction dans le plan de la zone cerclée;
en détectant les pixels qui ne sont pas d'arrière-plan dans la ligne de balayage correspondant au cercle; et
en effaçant les pixels qui ne sont pas d'arrière-plan.

6. Système selon la revendication 4, **caractérisé en ce que** l'indexeur est utilisé pour supprimer le cercle :
en détectant un premier pixel qui n'est pas d'arrière-plan dans la ligne de balayage, **caractérisé en ce que** le premier pixel qui n'est pas d'arrière-plan correspond au pixel qui n'est pas d'arrière-plan qui aura été détecté en premier lors d'un premier balayage linéaire de tous les pixels dans la ligne de balayage;
en détectant un premier pixel d'arrière-plan dans la ligne de balayage, **caractérisé en ce que** le premier pixel d'arrière-plan correspond au pixel d'arrière-plan qui aura été détecté en premier après la détection du premier pixel qui n'est pas d'arrière-plan lors du premier balayage linéaire de tous les pixels dans la ligne de balayage;
en détectant un deuxième pixel qui n'est pas d'arrière-plan dans la ligne de balayage, **caractérisé en ce que** le deuxième pixel qui n'est pas d'arrière-plan correspond au pixel qui n'est pas d'arrière-plan qui aura été détecté en dernier lors du premier balayage linéaire de tous les pixels dans la ligne de balayage;
en détectant un deuxième pixel d'arrière-plan dans la ligne de balayage, **caractérisé en ce que** le deuxième pixel d'arrière-plan correspond au pixel d'arrière-plan qui aura été détecté en premier lors d'un deuxième balayage linéaire des pixels dans la ligne de balayage, **caractérisé en ce que** le deuxième balayage linéaire commence au niveau du deuxième pixel qui n'est pas d'arrière-plan et avance dans une direction opposée à celle du premier balayage linéaire;
en supprimant le premier pixel qui n'est pas d'arrière-plan;
en supprimant tous les pixels qui ne sont pas d'arrière-plan entre le premier pixel qui n'est pas d'arrière-plan et le premier pixel d'arrière-plan;
en supprimant le deuxième pixel qui n'est pas d'arrière-plan; et
en supprimant tous les pixels qui ne sont pas d'arrière-plan entre le deuxième pixel qui n'est pas d'arrière-plan et le deuxième pixel d'arrière-plan.

7. Système selon la revendication 6, **caractérisé en ce qu'**il n'existe qu'un seul cercle pour chaque zone cerclée, **caractérisé en ce que** le cercle est une courbe concave qui est soit une courbe fermée soit une courbe presque fermée, et **caractérisé en ce que** l'effet de tacheture a été supprimé de la zone cerclée par prétraitement.
